# EUROPEAN PATENT APPLICATION

(11) **EP 2 159 438 A1**
(43) Date of publication of application: **03.03.2010**
(21) Application number: 08015459.4
(22) Date of filing: 02.09.2008
(51) Int. Cl.: F16D 7/02, E05F 15/00

(54) **Torque limiter for transmitting component of a drive unit**

(71) Applicant: Valeo Sicherheitssysteme GmbH, 85253 Erdweg (DE)
(72) Inventor: Kummer, Frank, 85253 Erdweg (DE); Winter, Andreas, 85253 Erdweg (DE)
(74) Representative: Jacquot, Ludovic R. G.

(57) **Abstract**

The invention relates to a torque limiter for a transmitting component, in particular in a drive unit for driving an opening/closing part of motor vehicle. The opening/closing drive unit (3) for driving an opening/closing part of a motor vehicle, according to the invention, comprises a motor unit (9), with an output shaft (11) which transmit a movement and torque to a transmitting component (12), via a torque limiter (15) integrated at a shaft/transmitting component interface, so as to dose/open the vehicle opening/closing part, the said torque limiter being at least a partially cylindrical element fitting the said shaft/transmitting component interface.

## Description

The invention relates to a torque limiter for a transmitting component, in particular in a drive unit for driving an opening/closing part of motor vehicle.

It is known to insert a drive unit including a transmitting component to open/close an opening/closing part of a motor vehicle, as the side doors, the tailgate or the trunk. In general, these systems comprise a motor unit serving to move the opening/closing part from a closing position to an opening position and vice versa.

The current problem is to protect the transmitting components.

A clutch placed between the motor and the gear box, or between the motor with a gear box and the transmitting components, absorbs the inertia of the motor as a torque limiter.

A disadvantage with this known device is their reliability and in particular consistency of the torque limit at which the torque limiter begins to authorize free rotation.

The present invention aims at solving the disadvantage of the torque limiter of a transmitting component of a drive unit by proposing a system, at the same time simple, inexpensive and reliable.

The present invention provides a releasable and controllable torque limiter.

Such purpose is achieved by way of the invention by proposing Opening/closing drive unit for driving an opening/closing part of a motor vehicle, comprising a motor unit with an output shaft which transmit a movement and torque to a transmitting component, via a torque limiter integrated at a shaft/transmitting component interface, so as to close/open the vehicle opening/closing part, characterized the said torque limiter is at least a partially cylindrical element fitting the said shaft/transmitting component interface.

Further, particularly advantageous embodiments of the invention are disclosed in the subclaims.

Further details and advantages of the invention will become apparent from the exemplary embodiments explained below with reference to figures, in which:
- Figure 1 is a schematic view of the tail region of a motor vehicle with an opened opening/closing part;
- Figure 2 shows a partial transversal view of the drive unit represented in Figure 1;
- Figure 3 shows a partial longitudinal section of the drive unit represented in Figure 2, according to one embodiment of the present invention;
- Figure 4 illustrates a perspective view of a torque limiter of a transmitting component of a drive unit according to one embodiment of the present invention;
- Figure 5 shows a longitudinal section of the torque limiter and the transmitting component of the drive unit according to a second embodiment of the present invention;
- Figure 6 is a functional cross section of the torque limiter according to the present invention;
- Figure 7 is a schematic view of the torque limiter according to the present invention.

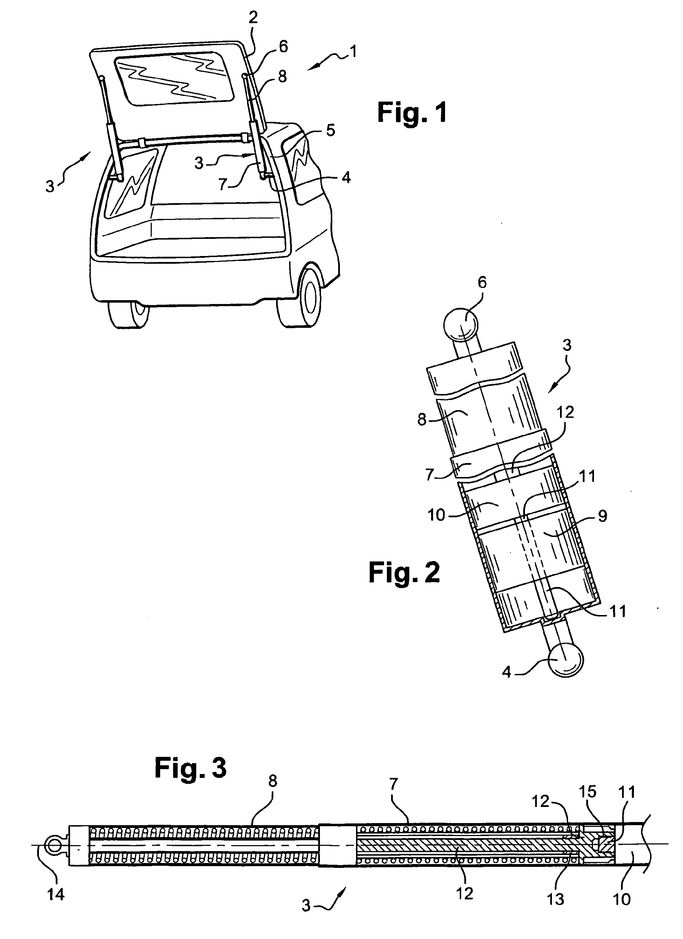

Figure 1 is a schematic view of the tail region of a motor vehicle with an opened part.

Figure 1 indicates by 1 a motor vehicle which has an opening/closing part, such as tailgate 2, which can be pivoted by one embodiment of a drive unit 3 from a closed position into the opened position.
The drive unit 3 according to the invention is, in this case, connected via a first angle joint 4 to the body 5 of the motor vehicle 1 and via a second angle joint 6 to the tailgate 2.

It should be understood that these words "drive unit" all kinds of unit that form an opening/closing system of an opening/closing part of a motor vehicle.

Figure 2 is a partial transversal view of the drive unit represented in Figure 1.

This figure illustrates the drive unit 3 which comprises two tubular housing 7, 8 inserted into one another so that they can extend and get shorter, according to a telescoping displacement.

More precisely, the housing 7 comprises an electric motor box. This box consists of an electric motor 9 and sometimes of a transmission gear unit 10 connected axially downstream of the electric motor.

The gear/motor unit has an output shaft 11 which is engaging a transmitting component 12. The transmitting component is a spindle 12, in this case.

It should be understood that these words "transmitting component" one or several elements that act or cooperate with a shaft connected to a gear/motor unit, in a drive unit, in order to open/close an opening/closing part of a motor vehicle.

According to one embodiment of the invention, the drive unit can be a spindle drive which allows the opening/closing a tailgate. In this case, the transmitting component is a spindle which is able to cooperate with a spindle nut.

According to a second embodiment of the invention a drive unit can be a modular drive unit which allows the opening/closing a trunk. In this case, the transmitting component is an arm, transversally rotated in reference to the hinge axis direction.

According to a third embodiment of the invention a drive unit can be a trunk lid drive which allows the opening/closing a trunk lid. In this case, the transmitting component is can be a rotating lever, rotated in a longitudinal plane of the drive motor. A rotational transformer is used in such case which transforms a first rotation of the motor shaft into a transversal rotation of an axis of the rotating lever, for instance, around the hinge axis direction.

Figure 3 shows a partial longitudinal section of the drive unit represented in Figure 2, according to one embodiment of the present invention.

In this example, the drive unit 3 is a compact spindle drive. It is formed by a spindle 12 connected to the housing 7, and of a spindle nut 13, connected to the housing 8.

The spindle nut 13 works with the spindle 12 which extends in the direction of the longitudinal axis 14 in order to drag or to push the housing 8 and thus, to open/close the opening/closing part.

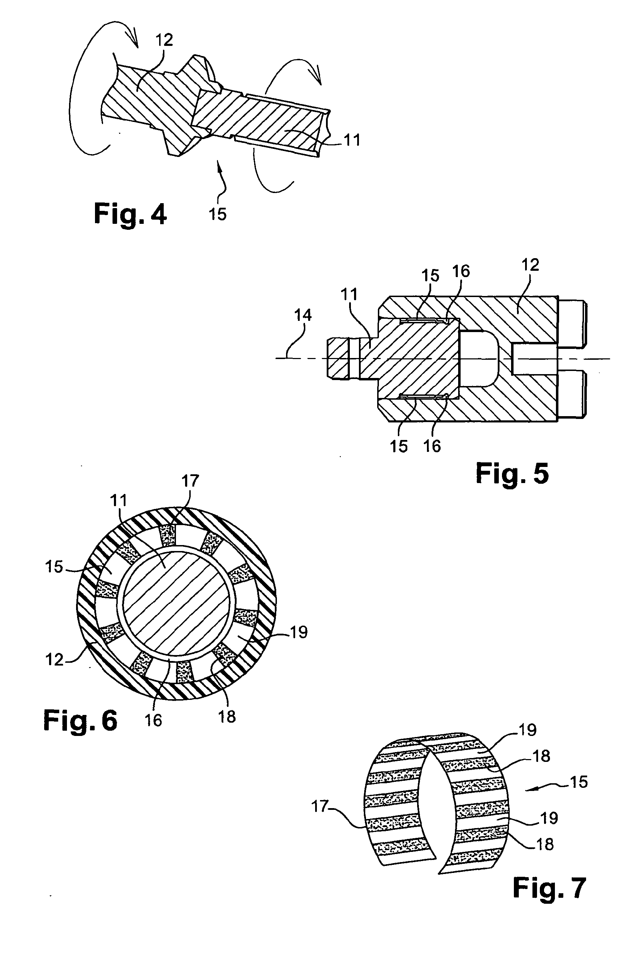

Figure 4 illustrates a perspective view of a torque limiter of a transmitting component of a drive unit according to one embodiment of the present invention.

The shaft 11 cooperate with the transmitting component 12, or its transmitting component bearing, to transform a rotational movement, from the motor and gear unit, in a rotational or translational movement. In other words, the shaft 11 comes from the electrical motor 9, or from the electric motor with the gear unit 10, to provide a movement to the transmitting component 12, in order to transmit the forces to opening/closing part.

The transmitting component 12 and the shaft 11 have a defined cylindrical shape which diameters with defined roughness and hardness surfaces.

The shaft 11 and the transmitting component 12 have specifical shapes and interface in order to cooperate each other, and to resist against friction force and not resist overloading torque.

The present invention proposes to integrate a torque limiter 15 at this output shaft/transmitting component interface.

The torque limiter 15 is like a torque limiter disconnecting a transmission when the torque exceeds a limit value in order to control the slide, for example, between the shaft 11 and the transmitting component 12.

For instance, when the torque from the transmitting component 12, such as spindle, is higher than the friction by the torque limiter 15, the transmitting component 12 rotates freely from the shaft 11 in tolerance direction.

Figures 5 is a longitudinal section of the torque limiter and the transmitting component of the drive unit according to a second embodiment of the present invention.

Figure 6 is a functional cross section of the torque limiter torque limiter according to the present invention.

For instance, the transmitting component 12 can include a groove 16, which forms housing for the torque limiter 15 and the extremity of the shaft, to disengage or disunite the shaft 11 from the transmitting component 12 when the forces or torque through friction surfaces on the end of both parts become too high.

The torque limiter 15 may be reported or integrated directly, or via the groove 16, of the transmitting component 12 or of the shaft 11 in order to slip themselves.

Indeed, this torque limiter 15 allows controlling the torque and radial and axial forces applied in the drive unit 3 when the opening/closing part blocks, for instance. So that the mechanism does not get damaged and the opening/closing part is not able to be destroyed when something appears in the area of movement, or in this instance a user applies a strong and abrupt pushing effort onto the opening/closing part.

The torque limiter 15 enables the transmitting component 12 to be rotated together with the closing/opening part 2, without the shaft 11 is rotated together with the transmitting component 12. No heavy braking forces are thus applied from the motor by the shaft onto transmitting component which would otherwise lead to damages in particular onto the transmitting component.

Moreover, the torque limiter limits also the forces drive unit implemented into the car body.

The torque limiter 15 is formed an elastic resistance component, creating a fit interface between the shaft 11 and the transmitting component 12.

The torque limiter 15 is at least a partially cylindrical element fitting the shaft/transmitting component interface. In other words, the torque limiter 15 is a cylindrical element means that the torque limiter surrounds at least a part of the end of the transmitting component or shaft.

The torque limiter 15 has a Cylindrical shape but can be also annular circular or ovoid and can from a continuous or discontinuous element namely, for instance, it can form an opened ring element which surrounds or embraces partially the cylindrical end of the shaft or of the transmitting component.

More precisely, this torque limiter 15 includes on its thickness some corrugations 17. The thickness, length, width and hardness of the corrugations 17 are predefined according to the type and the material of the transmitting component 12 and the shaft 11 and the forces/torque which is to be applied on them.

The torque limiter 15 is also designed depending on friction contacts and push forces from the shaft and the transmitting component.

In fact, elastic deformation of the corrugations 17 making them apply on both surfaces of the shaft 11 and transmitting component 12 as though they were spring such as represented in figure 6.

By an adapted elastic deformation of the corrugations, the pushing forces of the corrugations on the surfaces have an equally adapted amount, and the frictional force departing from which rotation begins is also adapted to the chosen value of torque limit.

Figure 7 is a schematic view of the torque limiter according to the present invention.

The torque limiter 15 acts as an elastic resistance or fastener on the inner and outer surfaces.

Advantageously, the summits 18 of the corrugations 17 embed the shaft 11 or the groove 16 and the bases 19 of the said corrugations act as bearing surface and slips against the groove or the shaft.

The numbers of the corrugations 17 and their spacing are predefined depending on the torque/forces applied.

Advantageously, the torque limiter 15 can include multiple bands of corrugations 17.

More precisely, the corrugations 17 can be annular, square, triangular or other non planar shape in order to have an elastic resistance.
The torque limiter 15 is made of either carbon steel or stainless steel, but can also made of other materials with an elastic resistance type known.

Moreover, the torque limiter 15 can be coated by a lubricant or grease to enhance its performance.

So, if something occurs or blocks or forces the closing/opening, the housing 8 follows the movement, for example, without forcing the drive unit and also the car body so that it does not damage.

### LEGEND

- 1: motor vehicle
- 2: opening/closing part
- 3: drive unit
- 4: angle joint
- 5: vehicle body
- 6: second angle joint
- 7: tubular housing
- 8: tubular housing
- 9: motor
- 10: gear unit
- 11: output shaft
- 12: transmitting component
- 13: spindle nut
- 14: longitudinal axis
- 15: torque limiter
- 16: groove
- 17: corrugation
- 18: summit
- 19: base

## Claims

1. Opening/closing drive unit (3) for driving an opening/closing part of a motor vehicle, comprising a motor unit (9) with an output shaft (11) which transmit a movement and torque to a transmitting component (12), via a torque limiter (15) integrated at a shaft/transmitting component interface, so as to close/open the vehicle opening/closing part, **characterized** the said torque limiter is at least a partially cylindrical element fitting the said shaft/transmitting component interface.

2. Opening/closing drive unit according to claim 1, **characterized in that** the torque limiter (15) is integrated in the shaft (11) or in the transmitting component (12).

3. Opening/closing drive unit according to claim 1 or 2, **characterized in that** the torque limiter (15) is formed by an elastic resistance component.

4. Opening/closing drive unit according to one of the previous claims, **characterized in that** the torque limiter is annular, circular or ovoid.

5. Opening/closing drive unit according to one of the previous claims, **characterized in that** the torque limiter (15) is a continuous or discontinuous element.

6. Opening/closing drive unit according to one of the previous claims, **characterized in that** the torque limiter (15) has corrugations on its thickness.

7. Opening/closing drive unit according to one of the previous claims, **characterized in that** the corrugations (17) are annular, square or triangular.

8. Opening/closing drive unit according to one of the previous claims, **characterized in** the torque limiter (15) include multiple bands of corrugations (17).

9. Opening/closing drive unit according to one of the previous claims, **characterized in that** the torque limiter (15) is made of carbon steel or stainless steel.

10. Opening/closing drive unit (3) according to one of the previous claims, **characterized in that** the motor unit (9) comprises a gear unit (10).
